# EUROPEAN PATENT SPECIFICATION

(11) **EP 2 435 610 B1**
(45) Date of publication and mention of the grant of the patent: **19.11.2014**
(21) Application number: 10780809.9
(22) Date of filing: 27.05.2010
(51) Int. Cl.: D06F 37/22

(54) **LAUNDRY MACHINE**
WASCHMASCHINE
MACHINE A LAVER

(30) Priority: 28.05.2009 KR 20090047192; 27.08.2009 KR 20090079950; 27.08.2009 KR 20090079829; 18.05.2010 KR 20100046456
(43) Date of publication of application: 04.04.2012
(73) Proprietor: LG Electronics Inc., Seoul 150-721 (KR)
(72) Inventor: KWON, Ig Geun, Changwon-si Gyeongsangnam-do 641-110 (KR); KIM, Young Suk, Changwon-si Gyeongsangnam-do 641-110 (KR); SEO, Hyun Seok, Changwon-si Gyeongsangnam-do 641-110 (KR); JO, Min Gyu, Changwon-si Gyeongsangnam-do 641-110 (KR)
(74) Representative: Urner, Peter
(86) International application number: PCT/KR2010/003383
(87) International publication number: WO 2010/137898

(56) References cited:
- EP-A1- 1 840 257
- EP-A2- 1 746 192
- EP-A2- 1 770 199
- WO-A2-2008/103007

## Description

### Technical Field

The present invention relates to a laundry machine, more specifically, to a laundry machine which has an improved structure to improve washing efficiency.

### Background Art

Generally, laundry machines are electric appliances which remove various kinds of contaminants attached to clothes, beddings, cloth items and the like (hereinafter, laundry) by way of a friction force of water currents generated by rotation of a drum and a shock applied to laundry including clothes and the other items. A full-automatic laundry machine released in recent has a series of cycles including a washing, rinsing, dry-spinning cycle which are implemented automatically.

In stead of pulsator type laundry machine having a tub rotatable in a state of standing vertically, drum type laundry machines having little problems of entangled laundry and a lot of wrinkles generated in the laundry have been more and more popular recently.

As a structure of such a drum type laundry machine mentioned above is described schematically, the drum type laundry machine includes a cabinet configured to define an exterior appearance thereof, a tub located in the cabinet to receive wash water, with being supported by a damper an a spring, and a cylindrical drum located in the tub to receive laundry therein. The drum receives a driving force from a driving part to implement washing for the laundry loaded into the drum.

According to the structure of the drum type laundry machine mentioned above, the drum is rotated to wash and dry-spin the laundry loaded therein and it is vibrated because of the rotational force of the drum and eccentricity of the laundry. The vibration generated by the rotation of the drum may be transmitted outside via the tub and the cabinet.

Because of that, a spring and a damper are provided essentially between the tub and the cabinet to prevent the vibration transmitted to the tub from transmitted to the cabinet.

The drum type laundry machine mentioned above may be installed in an existing installation circumstance, for example, in a sink or built-in circumstance, not installed separately. As a result, the size of the drum type laundry machine may be installed limited to be adjustable to its installation circumstance.

As mentioned above, it is limited for the structure of the spring and damper dampening the vibration of the tub and the cabinet to change an inner structure of the drum type laundry. As the installation circumstance of the laundry machine is limited, it is limited to change the size of the laundry machine.

A lot of researches and developments have been in progress to improve washing capacities of laundry machines for user convenience and the increased washed laundry amount. However, it is difficult to enlarge the size of the tub in the conventional drum type laundry machine to increase the washing capacity, because of the limitation condition mentioned above.

As a result, laundry machines having various types of structures have been under development to improve the washing capacity as mentioned above.

EP 1 840 257 A1 relates to a drum type washing machine including a cabinet forming an exterior of the drum type washing machine, a tub fixed within the cabinet, the tub having a laundry loading entrance at an outer circumference of the tub, a drum rotatably provided within the tub, the drum having an opening on a lateral side of the drum to communicate with the laundry loading entrance of the tub, a motor assembly provided next to one side of the drum to rotate said drum and a suspension assembly provided to support the weight of the drum and attenuate the vibration of said drum.

EP 1 770 199 A2 relates to a bearing housing assembly and a drum-type washing machine with the same, in which bearings are received in the bearing housing assembly and a damper for damping vibration of a drum is connected to a tub through a damper bracket. The bearing housing assembly may be formed by insert injection molding.

WO 2008/103007 A2 relates to a drum type washing machine including a cabinet, a tub provided in the cabinet, a drum rotatably provided in the tub, a bearing housing including a hub having a rotating shaft of the drum passed therethrough and bearings placed in a center portion thereof, a supporting portion which extends from an outside circumference of the hub integrally, and a fastening portion provided integrally with a supporting portion, a connective supporter fastened to the fastening portion for supporting the bearing housing and a vibration attenuating the device between the connective supporter and the cabinet for attenuating vibration.

### Disclosure of Invention

### Technical Problem

To solve the problems, an object of the present invention is to provide a laundry machine having a new structure of a slim rear portion, specifically, a drum type laundry machine having a slim rear portion in which a bearing housing, a motor and the like are located.

### Solution to Problem

### The object is solved by the features of the independent claims.

Preferably , a laundry machine includes a tub configured to receive wash water; a drum rotatably installed in the tub; a shaft connected with the drum; a bearing housing configured to rotatably support the shaft; a motor installed in the bearing housing, the motor connected with the shaft; and a suspension unit connected with the bearing housing to support vibration of the drum suspendingly, wherein the bearing housing includes a bent part extended to an outer circumference of the motor or longer in a radial direction and bent in a backward direction of the bearing housing, and an extending part connected to the suspension unit.

The bent part may be as deep as a half of the thickness of the motor or more.

An bracket coupling part may be bendingly extended from the bent part in a radial direction of the bearing housing.

The bracket coupling part may be extended to an inside of a radius of the tub.

The extending part, the bent part and the bracket coupling part may be integrally formed with the bearing housing by casting.

The tub may include a rear gasket configured to prevent the wash water held in the tub from leaking according to relative-motion of the bearing housing.

The rear gasket may be located in front of the bracket coupling part.

The extending part may include a first extending part and a second extending part which are symmetrical with respect to the bearing housing.

The first and second extending parts may be symmetrical to each other in a radial direction, with forming an angle of 40° ∼ 50° with respect to a perpendicular line, respectively.

The extending part may be extended in a perpendicularly downward direction of the bearing housing, to be coupled to be suspension unit.

A horizontal part extended in a backward direction of the bearing housing may be formed in the extending part.

A suspension bracket to which the suspension unit is fastened may be formed in a lower surface of the horizontal part.

The suspension unit may be fastened to the suspension bracket by a fastening bolt inserted in rear of the suspension bracket.

The tub may further include an opening formed in a front part thereof to load laundry therein and a door configured to open and close the opening. The tub may be supported by the suspension unit more rigidly than the drum is supported. The suspension unit may include a supporting bracket extended toward a front part of the suspension unit in parallel to the shaft and a cylinder damper configured to support the supporting bracket.

In the meanwhile, according to the laundry machine, the tub may be fixedly installed or supported by a flexible structure such as the suspension unit. Or the supporting of the tub may be in the middle of the suspension supporting and the fixed supporting.

That is, the tub may be supported flexibly by using the suspension unit which will be described in detail in the description of the invention, or it may be supported more rigidly than the flexible supporting. For example, the tub may be supported by the suspension unit or a rubber bushing which can give a predetermined flexible motion to the tub, less flexible than the support by way of the suspension unit. Or the tub may be fixedly installed.

Examples of tubs supported more rigidly than the supporting of the suspension unit will be followed.

First of all, a predetermined portion of the tub may be integrally formed with the cabinet.

Second, the tub may be connected and supported by a screw, rivet, rubber bushing and the like or fixedly welled, adhered or sealed. In this case, the rigidity of the suspension unit is stronger than the rigidity of these connecting materials with respect to a vertical direction which is a main vibration direction of the drum.

Such the tub may be enlarged in a possible limited installation space. That is, the tub may be enlarged to be adjacent to a wall or frame, which limits the horizontal size of the installation space, with respect to at least a right and left direction orthogonal to a shaft direction if the shaft is horizontally installed. Here, the tub may be integrally formed with a right or left wall of the cabinet.

The tub may be closer to the wall or frame than to the drum in the right and left direction. For example, the tub may be 1.5 times or less as distant from the wall or frame by as from the drum. In the state of the tub enlarged in the right and left direction, the drum may be also enlarged in the right and left direction. As the right and left direction distance is getting smaller between the tub and the drum, the drum may be enlarged in the right and left direction as much. The right and left direction vibration of the drum may be put into consideration to reduce the right and left direction distance between the tub and the drum. As the right and left direction vibration of the drum is getting smaller, the diameter of the drum may be enlarged more. As a result, the right and left direction rigidity of the suspension unit configured to suspend the vibration of the drum may be larger than the other direction rigidity. For example, the rigidity of the suspension unit with respect to right and left direction displacement may be the maximum with respect to the other direction rigidity.

Furthermore, the suspension unit may be directly connected with the bearing housing configured to support the shaft connected with the shaft, different from the suspension unit connected via the tub according to the conventional laundry machine. That is, the bearing housing may include a supporting part configured to support the shat and an extending part extended from the supporting part. The suspension unit may be coupled to the supporting part or the extending part of the bearing housing.

At this time, the suspension unit may include a bracket extended with respect to the shaft direction and the bracket may be extended forward to the door.

The suspension unit may include at least two suspensions distant from each other in the shaft direction.

The suspension unit may include a plurality of suspensions installed below the shaft to standing-support a supporting object, for example, the drum. The suspension unit may include a plurality of suspensions installed beyond the shaft to hang the supporting object thereto. According to these cases, suspensions are provided only below or beyond the shaft.

The gravity center of the vibration system including the drum, shaft, bearing housing and motor may be located in at least predetermined portion adjacent to the motor with respect to a longitudinal shape of the drum.

At least one suspension may be in front or rear of the gravity center or suspensions may be installed in front and rear of the gravity center, respectively.

The tub may include an opening formed in a rear part thereof. A driving part including the shaft, bearing housing and motor may be connected with the tub via a flexible material. The flexible material seals the opening formed in the rear part of the tub to prevent wash water from flowing out of the tub via the opening and to enable the driving part to relative-move with respect to the tub. Such the flexible material may be any flexible material which can seal, for example, gasket material such as front gasket. In this case, the flexible material may be named as rear gasket corresponding to the front gasket. The connection of the rear gasket with the driving part may be implemented in a rotational constrained state with respect to the rotational direction of the shaft. According to an embodiment, the rear gasket may be directly connected with the shaft or it may be connected with the extending part of the bearing housing.

A predetermined portion of the driving part which is located in a front connection with the rear gasket only to be exposed to wash water may be made of anticorrosive material. For example, the portion may be coated or covered with an auxiliary plastic-made part, for example, a tub back which will be described in detail. If there is a metal-made portion of the driving part, the metal-made portion may not be exposed to water directly and corrosion may be prevented accordingly.

Here, the cabinet may not be provided, different from the embodiment of the present invention. For example, a built-in laundry machine may be provided in a wall, instead of-the cabinet. That is, the laundry machine may be fabricated without the cabinet configured to define the exterior appearance of the laundry machine. Even in this case, the front part of the cabinet may be formed.

### Advantageous Effects of Invention

The present invention has a following advantageous effect.

According to the present invention, a laundry machine having a new structure of a slim rear portion may be provided. Specifically, a drum type laundry machine having a slim rear portion in which a bearing housing, a motor and the like are located may be provided.

### Brief Description of Drawings

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 an exploded perspective view illustrating a laundry machine according to an exemplary embodiment of the present invention;
FIGS. 2 and 3 are perspective view illustrating a tub front of the laundry machine;
FIG. 4 is a rear perspective view illustrating a tub rear of the laundry machine;
FIG. 5 is a perspective illustrating a suspension of the laundry machine;
FIG. 6 is a side view illustrating a coupling state between the tub and the suspension provided in the laundry machine;
FIG. 7 is a rear perspective view illustrating a bearing housing of the laundry machine according to the present invention;

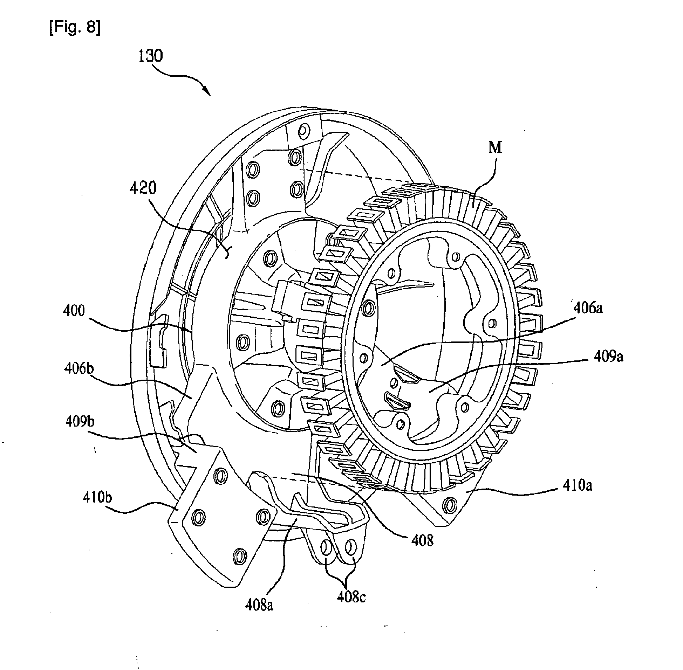

FIG. 8 is a rear perspective view illustrating a coupling state among the bearing housing, a tub back and a stator of the laundry machine according to the present invention; and
FIG. 9 is a perspective view illustrating a coupling state between the bearing housing and a suspension unit of the laundry machine of the present invention.

### Best Mode for Carrying out the Invention

Reference will now be made in detail to the specific embodiments of the present invention, examples of which are illustrated in the accompanying drawings. Wherever possible, the same reference numbers will be used throughout the drawings to refer to the same or like parts.

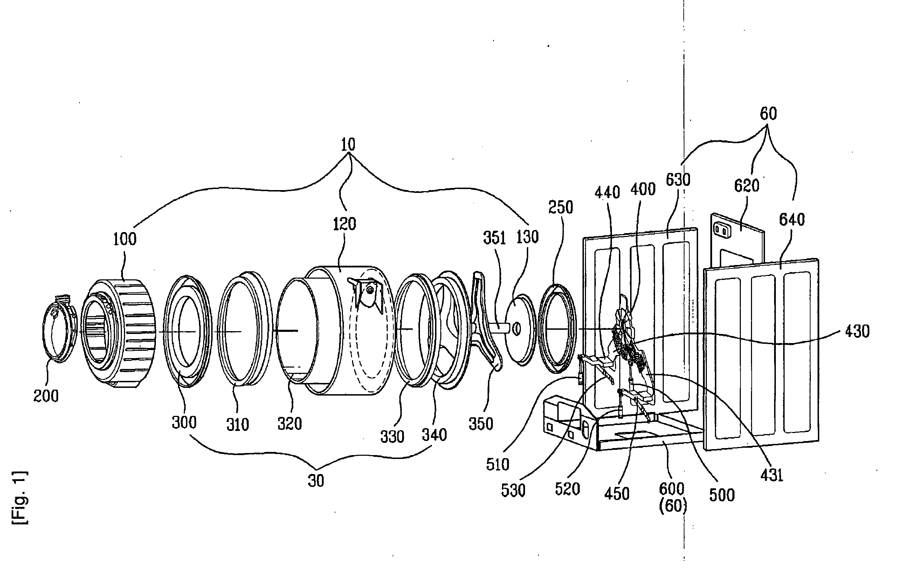

FIG. 1 is an exploded perspective view illustrating a laundry machine according to an exemplary embodiment of the present invention.

As shown in FIG. 1, the laundry machine includes a tub fixedly installed in a cabinet 60. The tub 10 includes a tub front 100 configured to define a front of the tub 10 and a tub rear 120 configured to define a rear of the tub 10. The tub front 100 and the tub rear 120 are assembled by screws and a predetermined space is formed in the assembled tub front and tub rear 120 to accommodate a drum 30. The tub 10 may further include a tub back configured to form a rear surface of the tub 10 and the tub back is connected with the tub rear 120 via a rear gasket 250. The rear gasket 250 may be made of flexible material not to transmit the vibration of the tub back 130 to the tub rear 120.

The cabinet defines an exterior appearance of the laundry machine and it includes a cabinet front (shown), a cabinet rear 620, a cabinet left 640, a cabinet right 630, a cabinet top (not shown) and a cabinet base 600.

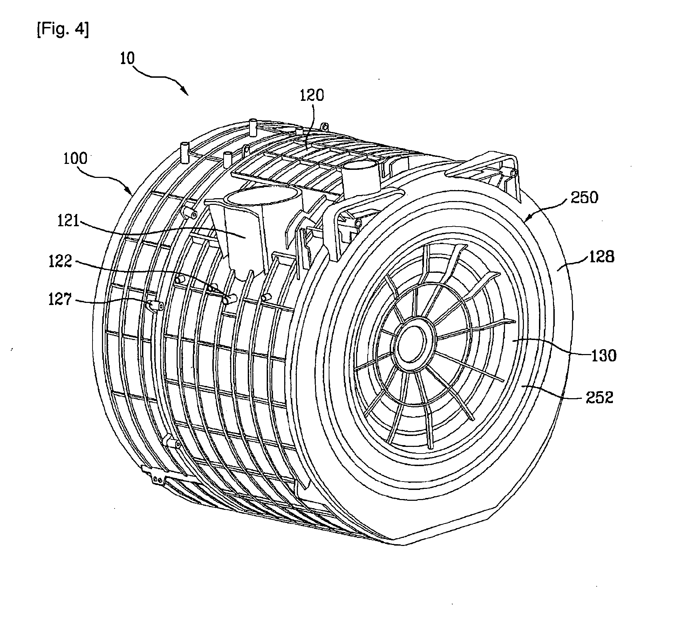

The tub rear 120 has a rear surface 128 and the rear surface 128 of the tub rear 120, the tub back 130 and the rear gasket 250 forms a rear surface of the tub 10. The rear gasket 250 is sealed and connected with both of the tub back 130 and the tub rear 120, such that wash water inside the tub 10 may not leak. The tub back 130 is rotated together with the drum 30 when the drum 30 is rotated. At this time, the tub back 130 is distant from the tub rear 120 a predetermined distance not to interfere with the tub rear 120. Since the rear gasket 250 is made of flexible, the tub back 130 is relative-moved, not interfering with the tub rear 120. The rear gasket 250 may include a corrugated part (252, see FIG. 4) extendible enough to enable this relative-motion.

A foreign substance preventing material 200 is provided in a front part of the tub front 100 to prevent foreign substances from coming between the tub 10 and the drum 30. The foreign substance preventing material 200 is flexible material and it is fixedly installed to the tub front 100. Here, the foreign substance preventing material 200 may be made of a predetermined material identical to the material of rear gasket 250.

The drum 30 is configured of a drum front 300, a drum center 320 and a drum back 340. Ball balancers may be installed in front and rear parts of the drum 30, respectively. The drum back 340 is connected with a spider 350 and the spider 350 is connected with a shaft 351. The drum 30 is rotated in the tub 10 by a rotational force transmitted via the shaft 351.

The shaft 351 is directly connected with a motor, passing through the tub back 130. Specifically, a rotor (not shown) of the motor is directly connected with the shaft 351. A bearing housing 400 is coupled to the rear surface 128 of the tub back 130 and the bearing housing 400 rotatably supports the shaft 351, located between the motor and the tub back 130.

A stator is fixedly installed in the bearing housing 400 and the rotor is located around the stator. As mentioned above, the rotor is directly connected with the shaft 351. Here, the motor may be an outer rotor type motor connected with the shaft 351 directly.

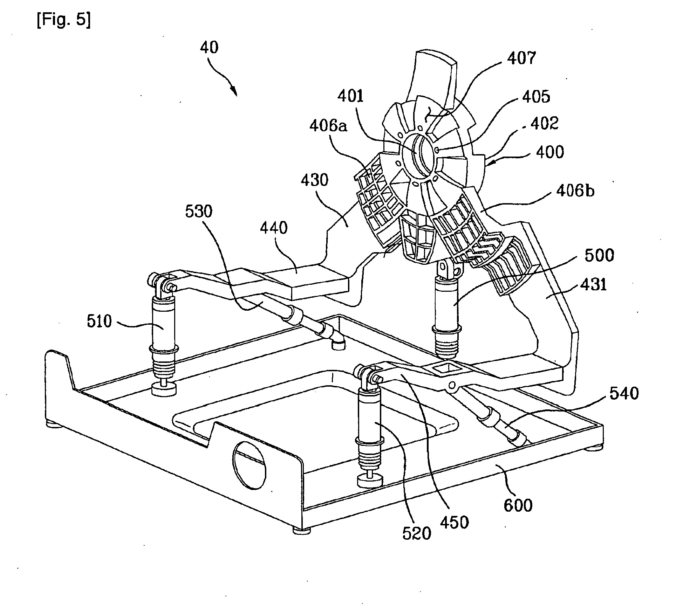

A suspension unit (40, see FIG. 5) located from the cabinet base 600 to support the bearing housing 400. The suspension unit 40 includes three spring cylinder dampers 500, 5100, and 520 and two cylinder dampers 530 and 540 configured to obliquely support the bearing housing 400 in a forward and backward direction. The suspension unit 40 is connected to the cabinet base 600 flexibly to allow the drum 30 to move in forward/backward and rightward/leftward directions, not completely fixed to the cabinet base 600.

That is, the suspension unit 40 is flexible enough to allow the predetermined forward/backward and rightward/leftward rotation of the drum 30 with respect to the supporting point of the suspension unit connected with the cabinet base 600. Perpendicular suspensions may be installed in the cabinet base 600 in the media of a rubber bushing (not shown). Perpendicular ones of the suspensions are used to suspend the vibration of the drum 30 elastically and oblique ones of them are used to dampen the vibration of the drum 30. That is, the perpendicular one is employed as spring out of a vibration system including a spring and damping means and the oblique ones as damping means.

The other parts of the tub 10 may be fixedly installed to the cabinet, except the tub back 130 and the vibration of the drum 30 is suspended and supported by the suspension unit. Substantially, each of the tub 10 and the drum 30 has a separate supporting structure. Even if the drum 30 is vibrated, the tub 10 may not be vibrated.

As follows, each element will be described in detail.

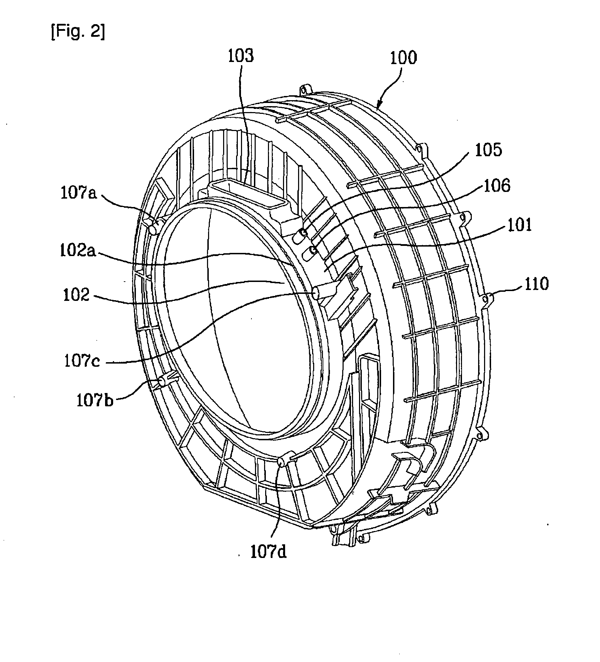

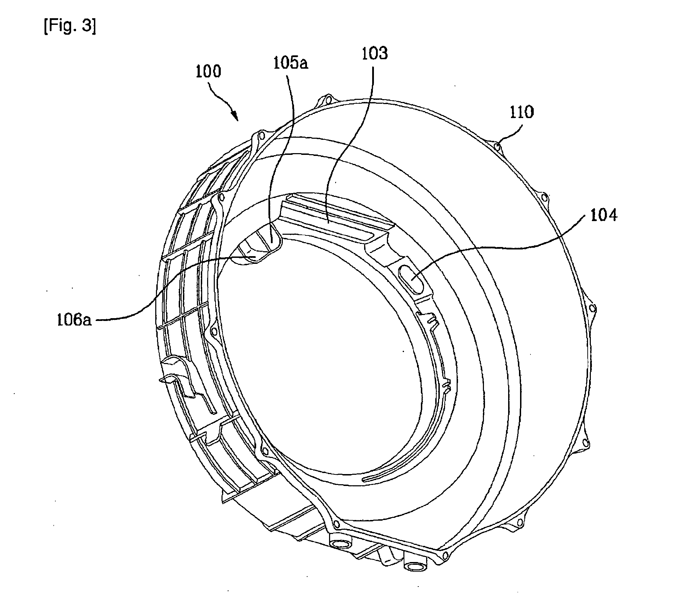

FIGS. 2 and 3 are diagrams illustrating the tub front 100. The tub front 100 includes a donut-shaped perpendicular front surface provided in a front portion of a cylindrical surface composing a predetermined portion of a side wall of the tub. A rear portion of the cylindrical surface is open as it is and the rear portion includes a plurality of securing holes 110 formed therein. The securing holes 110 are secured to corresponding securing holes (127, see FIG. 4) of the tub rear 120.

A rim part 101 is extended forward from an inner circumferential surface of the front surface of the tub front 100. The width of the rim part 101 is getting narrower downward from the top and substantially the rim part 101 may not be formed at a lower portion of an inner corner of the front surface.

In the rim part 101 may be formed a water supply inlet 104 configured to supply wash water, a hot air inlet 103 which will be used in a drying course, a circulating-water inlet 106 configured to drawn the wash water circulated by a circulation pump there through and a steam inlet 105 configured to draw steam there through.

Since the vibration of the tub 10 is noticeably reduced in the laundry machine according to the present invention, a water supply structure of a water supply hose, a drying structure of a drying duct and a steam supply structure, a circulating-water supply structure and the like may be implemented stably.

The hot air inlet 103 may be extended from the rim part 101 approximately in a square shape. Here, the hot air inlet 103 is required by a laundry machine having washing and drying functions and not by a laundry machine having no drying function.

The water supply inlet 104, the hot air inlet 103 and the like are formed in the front part of the tub front 100. Because of that, the supply of wash water, hot air and the like may be implemented in the front part of the tub 10.

The water supply inlet 104 and the other components may be located more forwardly than a front end of the drum 30 accommodated in the tub 10. As a result, the wash water, hot air and the like may be directly drawn into the drum 30 via the opening of the drum 30 configured to load the laundry therein or there out. Since fluidal material supplied to treat the laundry such as the wash water and hot air may be directly drawn into the drum 30 and this enables the laundry to be treated more efficiently.

In case detergent is supplied via a detergent box, together with the wash water, the detergent is directly drawn into the drum 30 and the amount of used detergent may be reduced accordingly, such that the amount of wash water may be reduced.

Here, a problem of tub contamination generated by detergent remnant loaded in a bottom of the tub may be solved. In case water is supplied from the front part of the tub, a door glass (not shown) may be washed by the supplied water advantageously.

*Even if hot air is supplied via the front portion of the tub, a perpendicular surface of the tub front 100, that is, a front surface thereof, the hot air flow may be 'c'-shaped, which is a complex air path formed by the hot air re-bent toward a perpendicular front surface of the tub after hot air having flown from the rear portion of the tub is bent downward from a front portion of a upper part of the tub. This 'c'-shaped air path will not be helpful to efficient hot air flow. However, when the hot air inlet 103 is formed in the rim part 101 of the tub front 100, the hot air may be bent perpendicularly one time and it may flow smoothly.

The water supply inlet 104 and the other holes may be located beyond a center of the drum. Because of that, the wash water and the like may be supplied to the drum inside from a front upper portion of the drum. If it is necessary to supply the wash water and the like to the drum inside from a front lower portion of the drum, the rim part 101 of the tub front 100 may be formed in a lower portion of the front surface part 112. if it is necessary to supply the wash water and the like in a right and left direction, not in the upward and downward direction mentioned above, the rim part 101 may be formed in a inner corner center portion 131 of the front surface part 112. That is, the appearance of the rim part 101 may be variable according to which direction the supplied fluidal material is supplied along.

A coupling part 102 is formed in the rim part 101 to couple the foreign substance preventing material 200 to the tub front 100. The coupling part 102 is extended forward from the front end of the rim part 101, having a small cylindrical surface-like shape. Ribs 102a are formed in an outer circumferential surface of the small cylindrical surface.

Once the coupling part 102 is inserted in the foreign substance preventing part 200, the foreign substance preventing part 200 may be coupled to the coupling part 102. for that, inserting recesses (not shown) are formed in the foreign substance preventing material 200 and the small cylindrical surface having the ribs 102a formed therein is inserted in the inserting recess (not shown).

The tub front 100 is fixedly coupled to the cabinet front (not shown) and coupling bosses 107a, 107b, 107c and 107d are formed in the front surface of the tub front 100 for such the fixed coupling, approximately surrounding the rim part 101. After the cabinet front (not shown) is located in a state of the tub front 100 installed, screws are fastened backward to couple the tub front 100 to the cabinet front.

FIG. 3 is a rear view illustrating an inside of the tub front 100. The steam inlet 105 may be connected with a seam hose. A steam guide 105a is formed in the tub front 100 to guide steam drawn via the steam inlet 105 toward a drum inside and a circulating-water guide 106a is formed in the tub front 100 to guide circulating-water drawn via the circulating-water inlet 106 toward the drum inside. The steam inlet 105, the circulating-water inlet 106, the steam guide 105a, the circulating-water guide 106 and the like may be integrally formed with the tub front 100. The tub front 100 is plastic-injection-molded and the steam inlet 105 and the other components may be injection-molded as some parts of the tub front 100.

The tub front 100 is coupled to the tub rear 120 to form a predetermined space configured to accommodate the drum 30. Here, the tub front 100 and the tub rear 120 may be screw-fastened to each other. For this screw-fastening, a plurality of screw-securing holes 110 may be formed along a circumference of the rear part of the tub front 100.

FIG. 4 is a diagram illustrating the connection among the tub front 100, the tub rear 120, the tub back 130 and the rear gasket 250.

The tub rear 120 is cylindrical-shaped to surround the drum 30 and a front part of the tub rear is open and a rear part of the tub rear includes a donut-shaped rear surface 128. The front part is sealing-coupled to the tub front 100. A diameter of the rear surface 128 of the tub rear 120 is larger than an outer diameter of the tub back 130. Even when the tub back 130 is vibrated, the tub back 130 is distant from the tub rear 120 enough not to interfere with the rear surface 128 of the tub rear 120.

The rear gasket 250 is provided between the rear surface 128 of the tub rear 120 and the tub back 130. The rear gasket 250 seals the rear surface 128 of the tub rear 120 and the tub back 130 and it includes a corrugated part 252 flexible enough not to interfere with the vibration of the tub back 130.

A hot air inlet 121 is formed in a predetermined portion of the tub rear 120 in case of the laundry machine having washing and drying functions. In case of the laundry machine only having the washing function, the hot air outlet 121 may be not provided, of course.

An auxiliary structure configured to fixedly support the tub with respect to the base is formed in lower parts of the tub rear 120 and the tub front 100.

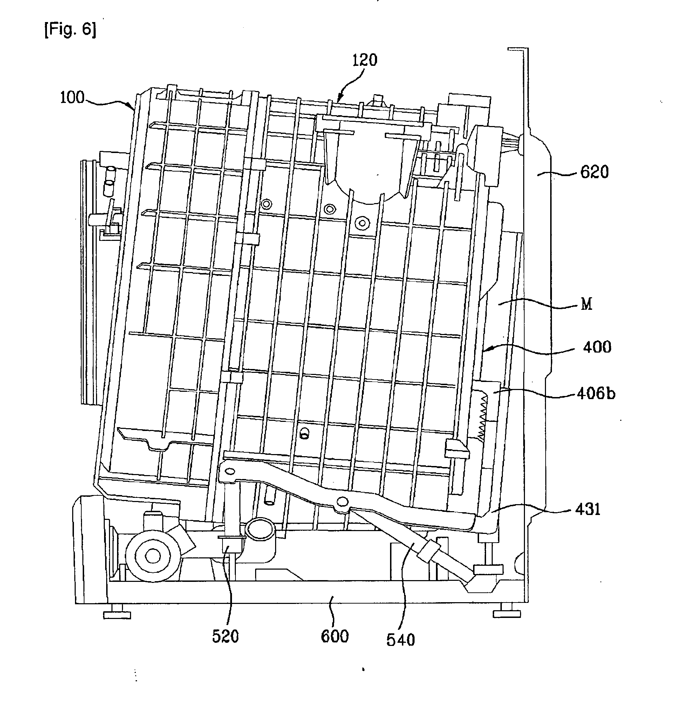

FIG. 5 is a diagram illustrating the suspension unit 40 mounted on the base 600. FIG. 6 illustrates a coupling state among the tub 100 and 120, the bearing housing 400 and the suspension unit 40.

The bearing housing 400 include a bearing supporting part 401 configured to support a bearing. A tub back securing part 407 configured to secure the tub back 250 thereto is formed in a front portion of the bearing housing 400 and a stator securing part 402 configured to secure the stator of the motor thereto is formed in a rear portion of the bearing housing 400.

Here, the suspension unit 40 includes a first oblique bracket 431, a second oblique bracket 430, a first suspension bracket 450 and a second suspension bracket 440.

The first suspension bracket 450 and the second suspension bracket 440 are extended in a forward and backward direction, that is, in an axial direction with respect to the rotation of the drum. In case they are extended in the axial direction, the first suspension bracket 450 and the second suspension bracket 440 may be called as axial brackets.

A first extending part 406a and a second extending part 406b extended from right and left side portions of the bearing housing 400 in a radius direction, respectively. The first oblique bracket 431 and the second oblique bracket 430 are connected to the first extending part 406a and the second extending part 406b, respectively. The first suspension bracket 450 and the second suspension bracket 440 are connected to the first oblique bracket 431 and the second oblique bracket 430, respectively.

Here, the shapes of the first extending part 406a, the first oblique bracket 431, and the first suspension bracket 450, the second extending part 406b, the second oblique bracket 430 and the second suspension bracket 440 are corresponding to each other. When the laundry is loaded in the drum, the first and second oblique brackets 431 and 430 are used to balance the center of gravity and they are used as mass in the vibration system of the drum.

The suspension unit 40 includes a first spring cylinder damper 520, a second spring cylinder damper 510 and a third spring cylinder damper 500 which are arranged vertically for the vertical suspension and a first cylinder damper 540 and a second cylinder damper 530 which are arranged obliquely for the backward suspension.

Here, a single one of the first spring cylinder damper 520, the second spring cylinder damper 510 and the third spring cylinder damper 500 may be arranged in a rear portion and the other two may be arranged in front right and left portions with respect to a center of the base 600. The first cylinder damper 540 and the second cylinder damper 530 may be arranged oblique forward and backward from rear right and left sides with respect to the center of the base 600, respectively.

Specifically, the first spring cylinder damper 520 is connected between the first suspension bracket 450 and the base 600. The second spring cylinder damper 510 is connected between the second suspension bracket 440 and the base 600. The third spring cylinder damper 500 is directly connected between the bearing housing 400 and the base 600.

The first cylinder damper 540 is obliquely installed between the first suspension bracket 450 and a rear portion of the base and the second cylinder damper 530 is obliquely installed between the second suspension bracket 440 and a rear portion of the base 600.

That is, the third spring cylinder damper 500 is arranged in a center of the rear portion and the first spring cylinder damper 520 and the second spring cylinder damper 510 are arranged in right and left sides of the rear portion. The first cylinder damper 540 and the second cylinder damper 530 are located on right and left sides of the third spring cylinder damper 500. That is, the spring cylinder dampers 500, 510 and 520 and the cylinder dampers 530 and 540 are vertically symmetrical.

As follows, the connecting structure of the tub back 130 and the bearing housing 400 of the laundry machine according to the present invention will be described.

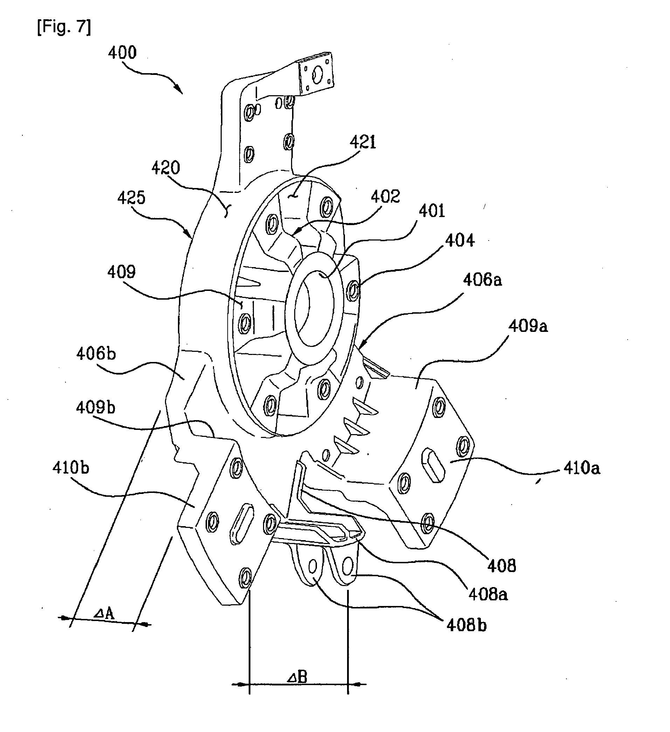

FIG. 7 is a rear perspective view illustrating a bearing housing of the laundry machine according to the present invention.

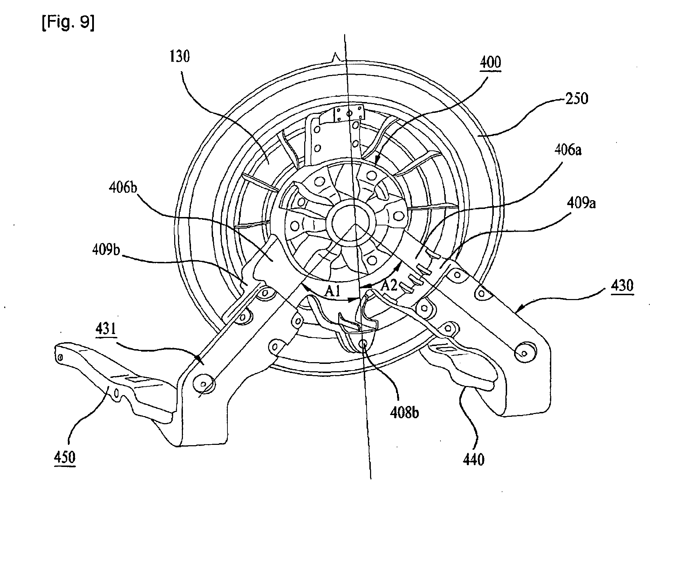

As shown in FIG. 7, the bearing housing 400 according to the present invention includes a bearing supporting part 401, configured to support a bearing, a tub back coupling part (425, see FIG. 5) configured to couple the tub back 130 to the bearing housing and a stator coupling part 402 configured to couple a stator (MS, see FIG. 9) to the bearing housing 400.

Here, the tub back coupling part 425 and the stator coupling part 402 are extended from the bearing supporting part 401 in a radial direction, integrally formed with bearing supporting part 401.

The tub back coupling part 425 and the stator coupling part 402 may be formed by zigzagged middle ribs 421 extended from the bearing supporting part 401 in a radial direction. This middle ribs 421 are alternatively projected and recessed like corrugation along a circumferential direction. Predetermined ones of the middle ribs 421 toward the front surface may form the tub coupling part 425 and the other ones toward the rear surface may form the stator coupling part 402.

A ring-shaped outer circumferential rib 420 is formed in an outer circumferential surface of the middle rib 421 of the tub back coupling part 425 and the stator coupling part 402. Here, the outer rib 420 forms an exterior appearance of the bearing housing 400 and it may be thicker than the middle rib 421. This is because the first and second extending parts 406a and 406b are extended from both sides of the bearing housing 400 in the radial direction. That is, the outer rib 420 is provided to secure enough rigidity, because the extending parts 406a and 406b are integrally formed with each other. The forward and backward width of the outer rib 420 may be larger than the thickness of the extending parts 406a and 406b.

Also, the projected portion of the tub back coupling part 425 is corresponding to the recessed portion of the stator coupling part 40 and the projected portion of the stator coupling part 402 is corresponding to the recessed portion of the tub back coupling part 425. This structure may reduce the amount of material composing the bearing housing 400 and secure enough rigidity.

The tub back 130 is seated in tub back coupling part 425 which is a front surface portion of the bearing housing 400 and a stator (MS) is coupled to the stator coupling part 402 which is a rear surface portion of the bearing housing.

In an aspect of the coupling, the tub back coupling part 425 and the stator coupling part 402 should have the minimum thickness required to couple the bearing housing to the tub back 130 and the stator (MS). If there is no other limitations, for example, no rigid problems, a forward/backward width of the middle rib from the position of the boss configured to couple the stator (MS) or the tub back 130 may be identical to the length of the boss.

The laundry machine according to the present invention may not have the fixedly connected or coupled structure between the bearing housing 400 and the tub. As a result, relatively small load is applied to the stator coupling part 402.

Different from the conventional laundry machine, the forward/backward width of the stator coupling part 402, especially, where the boss is located for the coupling of the stator, may be determined by the length of the boss. As the forward and backward width of the stator coupling part 402 is getting smaller, the slim and compact structure of the laundry machine may be getting easier to achieve.

The bearing housing 400 according to this embodiment has a predetermined portion which is bent backward as extended from both lower right and left sides thereof at a predetermined angle in a radial direction only to be re-extended in a radial direction. This extended portion will be connected with a first oblique bracket 431 and a second oblique bracket 430, which will be described later (see FIG. 9).

For that, a first extending part 406a and a second extending part 406b are extended from lower right and left sides of an outer circumference rub 420 of the bearing housing 200 in a radial direction. The first and second extending parts 406a and 406b are connected with first and second bent parts 409a and 409b extended backward perpendicularly, respectively.

First and second bracket coupling parts 410a and 410b are extended from the first and second bent parts 409a and 409b in a radial direction, respectively.

Here, the stator (MS) is located in the first and second bent parts 409a and 409b from rear portions of the first and second extending parts 406a and 406b. The rotor directly connected with the shaft 351 is also located in the first and second bent parts 409a and 409b.

That is, the rotor and stator (MS) of the motor (M) are located in a radial inner space defined by the first and second bent parts 409a and 409b, which is rear portions of the first and second extending parts 406a and 406b.

The first extending part 406a, the first bent part 409a and the First bracket coupling part 410a may be symmetrical to the second extending part 406b, the second bent part 409b and the second bracket coupling part 410b, respectively.

A third extending part 408 is formed in a lower portion of the bearing housing, located between the first and second extending parts 406a and 406b. A third horizontal part 408a is horizontally extended backward from the third extending part 408. A third suspension bracket 408b is extended from the third horizontal part 408a and the third spring cylinder damper 500 is connected to the third suspension bracket 408b. As shown in FIG. 7, a fastening bolt configured to fasten the third cylinder spring 500 is fastened and unfastened in the third suspension bracket 408b horizontally.

Each of the first and second extending parts 406a and 406b has an angle of 45° with respect to a perpendicular line passing the rotational center of the drum to be 90° to each other. This is for the stable support with respect to the upward and downward vibration as well as the rightward and leftward vibration of the bearing housing 400 (see, FIG. 9).

More specifically, the first and second extending parts 406a and 406b are extended from the bearing housing 400 in a radial direction. The first and second extending parts 406a and 406b have the largest moment at points configured to meet the bearing housing 400 and concentration of stress with respect to the moment should be reduced as much as possible to be advantageous in an aspect of rigidity.

According to FIG. 9, each of the first and second extending parts 406a and 406b has an oblique angle of 45° (A1 and A2) with respect to the perpendicular center line, considering that the first and second extending parts 406a and 406b are vertically symmetrical and that an outer circumferential surface of the stator coupling part is circular.

In the meanwhile, a plurality of ribs (not shown) may be formed in a predetermined surface of each of the first and second extending parts 406a and 406b to reinforce rigidity. Here, the number of the ribs formed in the first and second extending parts 406a and 406b is larger than ribs formed in the third extending part 408. As the third extending part 408 has a small moment load, the first and second extending parts 406a and 406b have a relatively large moment load and they are required to be more rigid. Because of that, the width of each of first and second extending parts 406a and 406b may be larger than the width of the third extending part 408.

The forward/backward width of each the first and second extending parts 406a and 406b is smaller than a width of an outer rib 420 of the stator coupling part 402. This is because each of the first and second extending parts has to avoid from interference with the stator (MS) or rotor located on the rear side of the first and second extending parts 406a and 406b and because the outer rib 420 having the relatively smaller width has to have enough rigidity. More precisely, the rear surfaces of the first and second extending parts 406a and 406b may be located more forward than a rear end of the outer rib 420.

The inside of the first and second bent parts 409a and 409b in which is the shaft 351 is located may be the space defined to locate the motor therein. The corrugated part 252 of the rear gasket 250 is located outer to the first and second bent parts 409a and 409b.

The positions of the first and second bent parts 409a and 409b are in rear of the bearing housing 400. Because of these positions, a predetermined space configured to allow the corrugated part 252 of the rear gasket 3250 located in rear of the first and second bent parts 409a and 409b to be movable.

## Claims

1. A laundry machine comprising:
a tub (10) to receive wash water;
a drum (30) rotatably placed in the tub;
a shaft (351) connected with the drum (30);
a bearing housing (400) to rotatably support the shaft (351);
a motor installed in the bearing housing (400), the motor connected with the shaft (351); and
a suspension unit (40) connected with the bearing housing (400) to support vibration of the drum (30) suspendingly,
wherein the bearing housing (400) comprises
an extending part (406a, 406b) extended in a radial direction to an outer circumference of the motor or longer,
**characterized in that** the bearing housing (400) further comprises
a bent part (409a, 409b) extended from the extending part (406a, 406b) in the radial direction and bent towards a backward direction of the bearing housing (400), and
a bracket coupling part (410a, 410b) extended from the bent part (409a, 409b) in the radial direction and connected to the suspension unit (40),
wherein the extending part (406a, 406b), the bent part (409a, 409b) and the bracket coupling part (410a, 410b) are integrally formed with the bearing housing (400) by casting.

2. The laundry machine as claimed in claim 1, wherein the width of the bent part (409a, 409b) in axial direction is as deep as a half of the thickness of the motor or more.

3. The laundry machine as claimed in claim 1, wherein the tub (10) comprises a rear gasket (250) to prevent the wash water held in the tub (10) from leak-ing according to relative-motion of the bearing housing (400).

4. The laundry machine as claimed in claim 3, wherein the rear gasket (250) is located in front of the bracket coupling part (410a, 410b).

5. The laundry machine as claimed in claim 1, wherein the extending part (406a, 406b) comprises a first extending part (406a) and a second extending part (406b) which are symmetrical with respect to the bearing housing (400).

6. The laundry machine as claimed in claim 5, wherein the first and second extending parts (406a, 406b) are symmetrical to each other in a radial direction, with forming an angle of 40°∼50° with respect to a perpendicular line, respectively.

7. The laundry machine as claimed in claim 6, wherein the bearing housing (400) further comprises a third extending part (408) extending in a perpendicularly downward direction of the bearing housing (400) to be coupled to the suspension unit (40).

8. The laundry machine as claimed in claim 7, wherein the suspension unit (40) is fastened to the third extending part (408) by a fastening bolt inserted in rear of a suspension bracket (408b).

9. The laundry machine as claimed in claim 1, wherein the tub (10) further comprises an opening formed in a front part thereof to load laundry therein and a door configured to open and close the opening.

10. The laundry machine as claimed in claim 1, wherein the tub (10) is supported more rigidly than the drum (30) is supported.

11. The laundry machine as claimed in claim 1, wherein the suspension unit (40) comprises an axially-extended bracket (440, 450) which extends in a rotational axis direction of the drum (30).

12. The laundry machine as claimed in claim 5, wherein the bearing housing (400) includes an outer circumferential rib (420) and the first and second extending parts (406a, 406b) are extended from lower right and left sides of the outer circumferential rib (420) in radial direction.

13. The laundry machine as claimed in claim 5, wherein the motor is located in a radial inner space defined by first and second bent parts (409a, 409b), which is at rear portions of the first and second extending parts (406a, 406b).

14. The laundry machine as claimed in any of the preceding claims, wherein the bearing housing (400) includes a bearing supporting part (401) configured to support a bearing and wherein a tub back coupling part (425) configured to couple a tub back (130) to the bearing housing (400) and a stator coupling part (402) configured to couple a stator to the bearing housing (400) extend from the bearing supporting part (401) in radial direction and are integrally formed with the bearing supporting part (401).

15. The laundry machine as claimed in claim 14, wherein the tub back coupling part (425) and the stator coupling part (402) are formed by zigzagged middle ribs (421) extended from the bearing supporting part (401) in radial direction and a ring-shaped outer circumferential rib (420) is formed at an outer circumferential surface of the middle ribs (421).

## Patentansprüche

1. Waschmaschine, die umfasst:
einen Bottich (10), um Waschwasser zu empfangen;
eine Trommel (30), die drehbar in dem Bottich positioniert ist;
eine Welle (351), die mit der Trommel (30) verbunden ist;
ein Lagergehäuse (400), um die Welle (351) drehbar zu tragen;
einen Motor, der in dem Lagergehäuse (400) angeordnet ist, wobei der Motor mit der Welle (351) verbunden ist; und
eine Aufhängungseinheit (40), die mit dem Lagergehäuse (400) verbunden ist, um die Schwingungen der Trommel (30) federnd zu tragen,
wobei das Lagergehäuse (400) umfasst:
einen Verlängerungsteil (406a, 406b), der sich in einer radialen Richtung zu einem äußeren Umfang des Motors oder darüber hinaus erstreckt,
**dadurch gekennzeichnet, dass** das Lagergehäuse (400) ferner umfasst:
einen abgewinkelten Teil (409a, 409b), der sich von dem Verlängerungsteil (406a, 406b) in der radialen Richtung erstreckt und in Richtung einer Rückwärtsrichtung des Lagergehäuses (400) abgewinkelt ist, und
einen Klammerkopplungsteil (410a, 410b), der sich von dem abgewinkelten Teil (409a, 409b) in der radialen Richtung erstreckt und mit der Aufhängungseinheit (40) verbunden ist,
wobei der Verlängerungsteil (406a, 406b), der abgewinkelte Teil (409a, 409b) und der Klammerkopplungsteil (410a, 410b) mit dem Lagergehäuse (400) durch Gießen einteilig gebildet sind.

2. Waschmaschine nach Anspruch 1, wobei die Breite des abgewinkelten Teils (409a, 409b) in axialer Richtung so tief wie eine Hälfte der Dicke des Motors oder mehr ist.

3. Waschmaschine nach Anspruch 1, wobei der Bottich (10) eine hintere Abdichtung (250) umfasst, um zu verhindern, dass das in dem Bottich (10) gehaltene Waschwasser gemäß einer Relativbewegung des Lagergehäuses (400) leckt.

4. Waschmaschine nach Anspruch 3, wobei sich die hintere Abdichtung (250) vor dem Klammerkopplungsteil (410a, 410b) befindet.

5. Waschmaschine nach Anspruch 1, wobei der Verlängerungsteil (406a, 406b) einen ersten Verlängerungsteil (406a) und einen zweiten Verlängerungsteil (406b) umfasst, die in Bezug auf das Lagergehäuse (40) symmetrisch sind.

6. Waschmaschine nach Anspruch 5, wobei der erste und der zweite Verlängerungsteil (406a, 406b) in einer radialen Richtung zueinander symmetrisch sind, wobei sie jeweils einen Winkel von 40°∼50° in Bezug auf eine senkrechte Linie bilden.

7. Waschmaschine nach Anspruch 6, wobei das Lagergehäuse (400) ferner einen dritten Verlängerungsteil (408) umfasst, der sich in einer senkrechten Abwärtsrichtung des Lagergehäuses (400) erstreckt, um an die Aufhängungseinheit (40) gekoppelt zu sein.

8. Waschmaschine nach Anspruch 7, wobei die Aufhängungseinheit (40) an dem dritten Verlängerungsteil (408) durch einen Befestigungsbolzen, der in den hinteren Teil einer Aufhängungsklammer (408b) eingefügt ist, befestigt ist.

9. Waschmaschine nach Anspruch 1, wobei der Bottich (10) ferner eine in seinem vorderen Teil gebildete Öffnung, um Wäsche darin zu laden, und eine Tür, die konfiguriert ist, die Öffnung zu öffnen und zu schließen, umfasst.

10. Waschmaschine nach Anspruch 1, wobei der Bottich (10) starrer als die Trommel (30) getragen wird.

11. Waschmaschine nach Anspruch 1, wobei die Aufhängungseinheit (40) eine sich axial erstreckende Klammer (440, 450) umfasst, die sich in einer Drehachsenrichtung der Trommel (30) erstreckt.

12. Waschmaschine nach Anspruch 5, wobei das Lagergehäuse (400) eine äußere Umfangsrippe (420) enthält und der erste und der zweite Verlängerungsteil (406a, 406b) sich von unteren rechten und linken Seiten der äußeren Umfangsrippe (420) in einer radialen Richtung erstrecken.

13. Waschmaschine nach Anspruch 5, wobei sich der Motor in einem radial inneren Raum befindet, der durch einen ersten und einen zweiten abgewinkelten Teil (409a, 409b) definiert ist und der sich an hinteren Teilen des ersten und des zweiten Verlängerungsteils (406a, 406b) befindet.

14. Waschmaschine nach einem der vorhergehenden Ansprüche, wobei das Lagergehäuse (400) einen Lagertrageteil (401) enthält, der konfiguriert ist, ein Lager zu tragen, und wobei ein hinterer Bottichkopplungsteil (425) konfiguriert ist, ein Bottichhinterteil (130) an das Lagergehäuse (400) zu koppeln, und sich ein Statorkopplungsteil (402), der konfiguriert ist, einen Stator an das Lagergehäuse (400) zu koppeln, von dem Lagertrageteil (401) in einer radialen Richtung erstreckt und mit dem Lagertrageteil (401) einteilig gebildet ist.

15. Waschmaschine nach Anspruch 14, wobei der hintere Bottichkopplungsteil (425) und der Statorkopplungsteil (402) durch Zickzackmittelrippen (421) gebildet sind, die sich von dem Lagertrageteil (401) in einer radialen Richtung erstrecken, und eine ringförmige äußere Umfangsrippe (420) an einer äußeren Umfangsfläche der mittleren Rippen (421) gebildet ist.

## Revendications

1. Machine à laver, comprenant :
une cuve (10) pour recevoir de l'eau de lavage ;
un tambour (30) placé en rotation dans la cuve ;
un arbre (351) connecté avec le tambour (30) ;
un boîtier de palier (400) pour supporter l'arbre (351) en rotation ;
un moteur installé dans le boîtier de palier (400), le moteur étant connecté avec l'arbre (351) ; et
une unité de suspension (40) connectée avec le boîtier de palier (400) pour supporter les vibrations du tambour (30) de manière suspendue,
dans laquelle le boîtier de palier (400) comprend
une partie en extension (406a, 406b) qui s'étend dans une direction radiale vers une circonférence extérieure du moteur ou plus loin,
**caractérisée en ce que** le boîtier de palier (400) comprend en outre
une partie cintrée (409a, 409b) en extension depuis la partie en extension (406a, 406b) dans la direction radiale et cintrée vers une direction postérieure du boîtier de palier (400), et
une partie de couplage de monture (410a, 410b) en extension depuis la partie cintrée (409a, 409b) dans la direction radiale et connectée à l'unité de suspension (40),
dans laquelle la partie en extension (406a, 406b), la partie cintrée (409a, 409b), et la partie de couplage de monture (410a, 410b) sont formées intégralement avec le boîtier de palier (400) par fonderie.

2. Machine à laver selon la revendication 1, dans laquelle la largeur de la partie cintrée (409a, 409b) en direction axiale est aussi élevée que la moitié de l'épaisseur du moteur ou plus.

3. Machine à laver selon la revendication 1, dans laquelle la cuve (10) comprend un joint arrière (250) pour empêcher à l'eau de lavage contenue dans la cuve (10) de fuir en raison du mouvement relatif du boîtier de palier (400).

4. Machine à laver selon la revendication 3, dans laquelle le joint arrière (250) est situé en face de la partie de couplage de monture (410a, 410b).

5. Machine à laver selon la revendication 1, dans laquelle la partie en extension (406a, 406b) comprend une première partie en extension (406a) et une seconde partie en extension (406b) qui sont symétriques par rapport au boîtier de palier (400).

6. Machine à laver selon la revendication 5, dans laquelle la première et la seconde partie en extension (406a, 406b) sont symétriques l'une par rapport à l'autre dans une direction radiale, en formant un angle de 40° à 50° par rapport à une ligne perpendiculaire, respectivement.

7. Machine à laver selon la revendication 6, dans laquelle le boîtier de palier (400) comprend en outre une troisième partie en extension (408) s'étendant dans une direction perpendiculaire vers le bas du boîtier de palier (400) pour être couplée à l'unité de suspension (40).

8. Machine à laver selon la revendication 7, dans laquelle l'unité de suspension (40) est fixée sur la troisième partie en extension (408) par un boulon de fixation inséré dans l'arrière d'une monture de suspension (408b).

9. Machine à laver selon la revendication 1, dans laquelle la cuve (10) comprend en outre une ouverture formée dans une partie frontale d'elle-même pour charger du linge à laver à l'intérieur, et une porte configurée pour ouvrir et fermer l'ouverture

10. Machine à laver selon la revendication 1, dans laquelle la cuve (10) est supportée plus rigidement que le tambour (30) est supporté.

11. Machine à laver selon la revendication 1, dans laquelle l'unité de suspension (40) comprend une monture (440, 450) s'étendant axialement, qui s'étend dans une direction de l'axe de rotation du tambour (30).

12. Machine à laver selon la revendication 5, dans laquelle le boîtier de palier (400) inclut une nervure circonférentielle extérieure (420), et la première et la seconde partie en extension (406a, 406b) sont en extension depuis les côtés inférieurs droit et gauche de la nervure circonférentielle extérieure (420) en direction radiale.

13. Machine à laver selon la revendication 5, dans laquelle le moteur est placé dans un espace intérieur radial défini par une première et une seconde partie cintrée (409a, 409b), et qui se trouve au niveau des portions arrière de la première et de la seconde partie en extension (406a, 406b).

14. Machine à laver selon l'une quelconque des revendications précédentes, dans laquelle le boîtier de palier (400) inclut une partie de support de palier (401) configurée pour supporter un palier, et dans laquelle une partie de couplage du dos de cuve (425), configurée pour coupler un dos de cuve (130) au boîtier de palier (400), et une partie de couplage de stator (402), configurée pour coupler un stator au boîtier de palier (400), s'étendent depuis la partie de support de palier (401) en direction radiale et sont formées intégralement avec la partie de support de palier (401).

15. Machine à laver selon la revendication 14, dans laquelle la partie de couplage du dos de cuve (425) et la partie de couplage de stator (402) sont formées par des nervures médianes (421) en zigzag qui s'étendent depuis la partie de support de palier (401) en direction radiale, et une nervure circonférentielle extérieure (420) de forme annulaire est formée au niveau de surface circonférentielle extérieure des nervures médianes (421).
